# EUROPÄISCHE PATENTSCHRIFT

(11) **EP 1 088 974 B1**
(45) Veröffentlichungstag und Bekanntmachung des Hinweises auf die Patenterteilung: **15.12.2004**
(21) Anmeldenummer: 99118845.9
(22) Anmeldetag: 24.09.1999
(51) Int. Cl.: F02B 23/10, F02F 1/42, F02F 1/24

(54) **Motor mit verringerter NOX Emission und Verfahren zu dessen Betrieb**
Engine with reduced NOX emission and method of operating
Moteur avec emission NOX diminuée et procédé d'opération

(43) Veröffentlichungstag der Anmeldung: 04.04.2001
(73) Patentinhaber: Ford Global Technologies, Inc., A subsidiary of Ford Motor Company, Dearborn, Michigan 48126 (US)
(72) Erfinder: Phlips, Patrick, 50858 Köln (DE)
(74) Vertreter: Drömer, Hans-Carsten, Dipl.-Ing.

(56) Entgegenhaltungen:
- DE-A- 2 944 339
- DE-A- 19 726 683
- DE-A- 19 730 660
- US-A- 5 720 253

## Beschreibung

Die Erfindung betrifft eine Motor mit Benzindirekteinspritzung.

Es ist bekannt, dass bei stöchiometrischem Betrieb des Motors durch die Rückführung von Abgas die NOx Emission verringert werden kann. Bei mittleren Lasten kann ein gut abgestimmter Motor Rückfürraten von bis zu 30 %, bezogen auf die Frischladungsmasse, tolerieren. Bei diesen AGR Raten ist der Motor annähernd entdrosselt. Für einen Serienmotor mit Tumble Einlasskanälen ohne Direkteinspritzung konnte eine AGR Rate von 32 % erreicht werden. Dabei läuft der Motor nahe an der Stabilitätsgrenze von 0.2 bar als Standardabweichung für den Druck im Brennraum (IMEP-indicated meand effective pressure). Dabei wird ein Zündwinkel von gut 60° vor OT benötigt was bei schnell wechselnden Lastbedingungen problematisch sein kann. Daher würde eine typische Fahrzeugabstimmung etwa bei 15% AGR Rate gewählt, wobei immer noch ein Zündwinkel von 50° vor OT notwendig ist. Mit dieser Einstellung kann die Stickoxid von 18 auf 6 g/kWh reduziert werden.

Aus EP-A1-0916824 ist eine Motor mit Direkteinspritzung, einer Verbrennungskammer zwischen der Unterseite des Zylinderkopfes, der Oberseite des Kolbens im übrigen umgeben von der Zylinderlauffläche, sowie mit zwei Lufteinlasskanälen mit Ventilen und einem Luftauslasskanal mit Ventil schliesslich mit zwei Zündkerzen bekannt. Gegenüber der Kolbenachse bzw. Zylinderachse ist der Injektor geneigt. Der Lufteinlasskanal verläuft jedoch im Wesentlichen parallel zur Kolbenachse. Der Motor soll für einen Magerbetrieb geeignet sein und wegen der verringerten Temperatur weniger NOx emittieren.

Die Verwendung von zwei Zündkerzen in Verbindung mit einer direkten Kraftstoffeinspritzung ist auch aus DE 2944339 und DE 3019330 bekannt. Die Verwendung von zwei Zündkerzen und das gerichtete Einspritzen von Kraftstoff, insbesondere in Verbindung mit einer Mulde in der Oberfläche des Kolbens sollte zu einer besseren Verbrennung des Kraftstoffes führen.

Aus DE-A- 197 30 660 ist ein Motor mit Kraftstoffdirekteinspritzung bekannt, bei dem der Injektor im Bereich des Gasauslassventils in den Zylinder mündet. Hierdurch soll eine verbesserte Gemischbildung an der heißen Auslaßseite erfolgen.

Aus US-A-5 720 253 ist bekannt, den Neigungswinkel des Injektors auf den Öffnungswinkel des Kraftstoffstrahls abzustimmen, um ein Ansprüchen der Zündelektrode zur vermeiden, Hierdurch soll die Verdampfung des Kraftstoffs bei der Direkteinspritzung optimiert werden.

Aus US-A- 4 958 604 ist ein Motor bekannt, bei dem in einer Referenzebene, die durch die Kolbenachse und die Injektordüse geht, der Injektor einen Winkel Theta 1 zur Kolbenachse und ein etwa linearer Abschnitt im Bereich der Zylinderkopfaußenfläche vorgesehen ist und die Mittellinie dieses linearen Abschnittes zur Kolbenachse einen Winkel Theta 2, wobei der Winkel Theta 2 größer als der Winkel Theta 1 ist. Ferner weisen die Einlasskanäle nahe dem Ventilsitz eine andere Neigung Theta 3 zur Kolbenachse als stromaufwärts auf. Insbesondere ist die Neigung Theta 3 der Einlasskanäle nahe dem Ventilsitz zur Kolbenachse kleiner als Theta1.

Hier setzt auch die Erfindung an, indem für einen stöchiometrischen Betrieb des Motors die Lufteinlasskanäle beide als Füllungskanäle (also ohne Einrichtung zur Drallerzeugung, mit möglichst geringen Strömungswiderstand) ausgebildet sind und diese sowie der Injektor relativ zur Kolbenachse eine bestimmte Neigung aufweisen. In einer Referenzebene, die durch die Kolbenachse und die Injektordüse geht, weist der Injektor einen Winkel zur Kolbenachse Theta 1 auf. In Projektion auf diese Referenzebene ist wenigstens einer der Lufteinlasskanäle so angeordnet und gestaltet, dass ein etwa linearer Abschnitt im Bereich der Zylinderkopfaussenfläche vorgesehen ist und die Mittellinie dieses linearen Abschnittes zur Kolbenachse einen Winkel Theta 2 bildet. Ferner soll erfindungsgemäss gelten, dass der Winkel Theta 2 grösser als der Winkel Theta 1 ist. Diese Winkel sind insbesondere so gewählt, dass der 90° Winkel zwischen Kolbenachse und der unteren Zylinderkopfoberfläche etwa gedrittelt wird. Die Verwendung von zwei Füllungskanälen führt zu einer erheblichen Verbesserung des volumetrischen Wirkungsgrades. Dies gilt besonders bei niedrigen Drehzahlen, bei'denen das maximale Drehmoment noch nicht erreicht ist. Ausserdem wird auch das Drehmoment in diesem Drehzahlbereich erheblich gesteigert. Die Zündkerzen sind symmetrisch zur Referenzebene angeordnet, so dass in Verbindung miteiner ebenfalls symmetrischen Anordnung der Einlassventilsitze eine erhöhte Zuverlässigkeit der Gemischzündung erreicht wird

Die Einlasskanäle weisen nahe dem Ventilsitz eine andere Neigung Theta 3 zur Kolbenachse als stromaufwärts auf. Insbesondere ist die Neigung Theta 3 der Einlasskanäle nahe dem Ventilsitz zur Kolbenachse kleiner als Theta 1.

Durch einen spitzen Öffnungswinkel des Kraftstoffstrahles - in Verbindung mit der Neigung der Ventilachse - wird verhindert, dass die Ventile angesprüht werden. Schliesslich wird der Kraftstoffstrahl im Wesentlichen in die Mitte des Zylinders gelenkt und bereits im Ansaugtakt injiziert.

Weiter ist es vorteilhaft, die Zündkerzen weder zu weit zur Mitte hin, noch zu weit zum Rand hin, anzuordnen. Bevorzugt ist ein Abstand (X) der Zündkerzen für den das Verhältnis (X/B) zum Kolbendurchmesser (B) in einem Wertebereich zwischen 0,2 und 0,8 liegt.

In der oberen Begrenzungsfläche des Brennraumes sind die Mittelpunkte der Zündkerzen (etwa die Mittenkontakte) äquidistant zu den Mittelpunkten der benachbarten Einlass/Auslassventilsitze angeordnet. Dadurch kann sich bezogen auf die Ebene (Kurbelachsenebene), die senkrecht zur Referenzebene liegt und durch die Kolbenachse geht, eine leicht exzentrische Anordnung der Zündkerzen ergeben.

Der Abstand (Y) zur Kurbelachsenebene ist bevorzugt so gewählt, dass Y/B im Wertbereich zwischen 0,05 und 0,3 liegt. Dies wirkt sich günstig auf die Brenngeschwindigkeit des Gemisches aus

In der Projektion auf die durch die Kopfunterseite gehende Ebene, ist der Auslasskanal gegenüber der Referenzebene geneigt, wobei in der Draufsicht bei gekrümmtem Auslasskanal, insbesondere die Verbindungslinie zwischen Ventilsitzmittelpunkt, bzw. dessen Projektion und dem Mittelpunkt der Anschlussöffnung des Auslasskanals an der Zylinderkopfaussenseite bzw. von dessen Projektion gegenüber der Referenzebene geneigt ist.

In der Projektion auf die Ebene durch die Zylinderkopfunterseite sind die Einlasskanäle gegenüber der Referenzebene ebenfalls geneigt. Bei gekrümmten Einlasskanälen bezieht sich diese Angabe auf die Verbindungslinie zwischen den Mittelpunkten der Ventilsitze und den Mittelpunkten der Einlasskanalöffnungen an der Zylinderkopfaussenseite. Die erfindungsgemässe Konstruktion führt dazu, dass eine insgesamt schnellere Verbrennung erreicht wird. Dies führt dazu, dass Schwankungen in der Brenngeschwindigkeit vermindert werden. Die beschriebene Motor kann aufgrund der erreichten erhöhten Verbrennungsgeschwindigkeit über einen erweiterten Drehzahlbereich hinsichtlich der Masszahl von 50 % Umsatzrate des gezündeten Gemisches in oder sehr nahe an dem optimalen Zeitpunkt von 8° nach OT gefahren werden. Dadurch ergibt sich ein insgesamt verbesserter Wirkungsgrad.

Die beiden Einlasskanäle sind symmetrisch zur Referenzebene ausgebildet und verlaufen in der Projektion möglichst gradlinig.

Ein Verfahren zum Betrieb des zuvor geschilderten Motors sieht vor, dass der Zündzeitpunkt später als 50° vor OT und die maximale AGR Rate etwa 40% bezogen auf die Frischladungsmasse (Luft- und Kraftstoffmasse) beträgt.

Bevorzugt beträgt die AGR Rate bei einem Lastschnitt bei 2500 Umdrehungen min und bei mittlerer Last etwa 30% und der Zündzeitpunkt bezogen auf die Drehung der Kurbelwelle etwa 40° vor OT. Diese relativ späten Zündzeitpunkte erlauben bei schnell wechselnden Lastbedingungen eine zuverlässigeres Nachführen des Zündzeitpunktes.

Durch die grossen AGR Raten kann der Motor weitgehend entdrosselt betrieben werden. Dies verbessert die Drehmomentabgabe. Ausserdem wird durch die mit dem Abgas eingebrachte Wärme die Verdampfung des Kraftstoffes beschleunigt und verstärkt Kondensation bei kaltem Motor verhindert. Die erhöhte AGR Rate führt zu deutlich verminderter NOx Emission bis auf etwa 3 g/kWh ohne HC Emissionen zu verstärken.

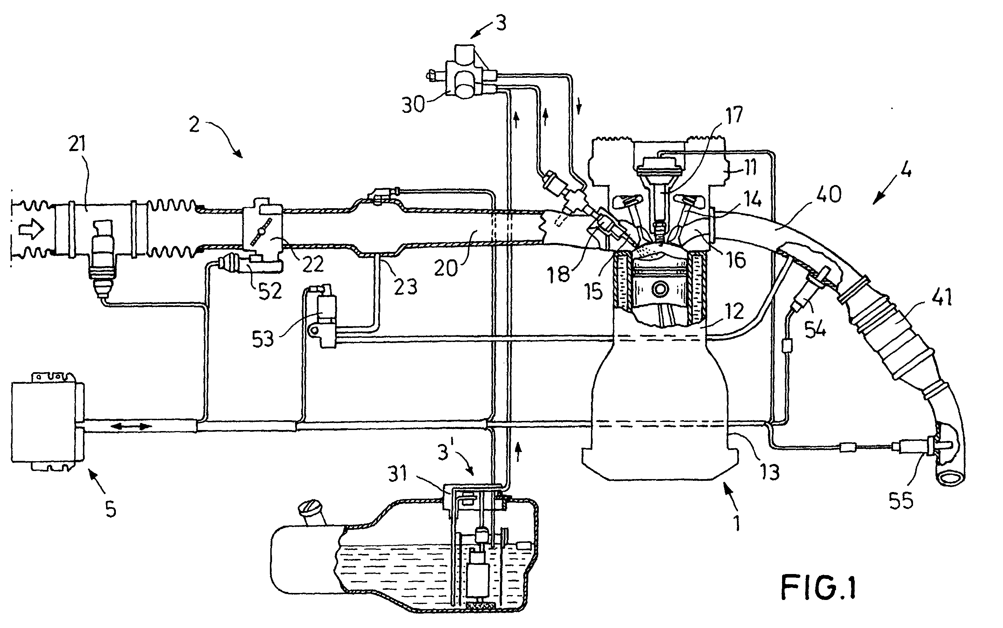

Anhand der in den Figuren 1-5 dargestellten Ausführung wird die Erfindung näher erläutert.

Figur 1 zeigt einen Motor 1 mit Luftzuführungssystem 2, Kraftstoffzuführungssystem 3, 3' Abgassystem 4, Elektronische Steuereinheit 5.
Der Motor weist einen Zylinderkopf 11, Block 12, Kurbelwellengehäuse 13 auf. Im Zylinderkopf sind Ventile 14, Luftzuführungskanäle 15, Luftauslasskanäle 16, Zündkerzen 17 und Injektor 18 angeordnet.

Das Luftzuführungssystem ist mit seiner Leitung 20, mit den Luftzuführungskanälen 15 verbunden. In der Leitung 20 befindet sich ein Luftmengensensor 21 eine elektronisch gesteuerte Drosselklappe 22 sowie ein Anschluss für die Rückführung von Abgas 23.

Das Kraftstoffzuführungssytem 3 ist mit dem Injektor 18 verbunden. Es weist eine Hochdruckpumpe 30 und eine am Kraftstoffzuführungssystem 3' in der Nähe des Kraftstofftanks angeordnete Niederdruckpumpe 31 auf.

Das Abgassystem 4 ist mit der Leitung 40, mit dem Auslasskanal 16 verbunden. In dieser Leitung ist ausserdem der NOx-Katalysator 41 angeordnet.

Die Motorsteuerung 5 ist mit dem Sensor 21 für die Luftmassenstrommessung, der Einstelleinrichtung 52 für die elektronische Drosselklappe, der Steuereinrichtung 53 für die Steuerung/Regelung der Abgasrückführungsmenge, den Pumpen 31 und 30, den Zündkerzen 17 sowie Sauerstoffsensoren 54 und 55 verbunden.

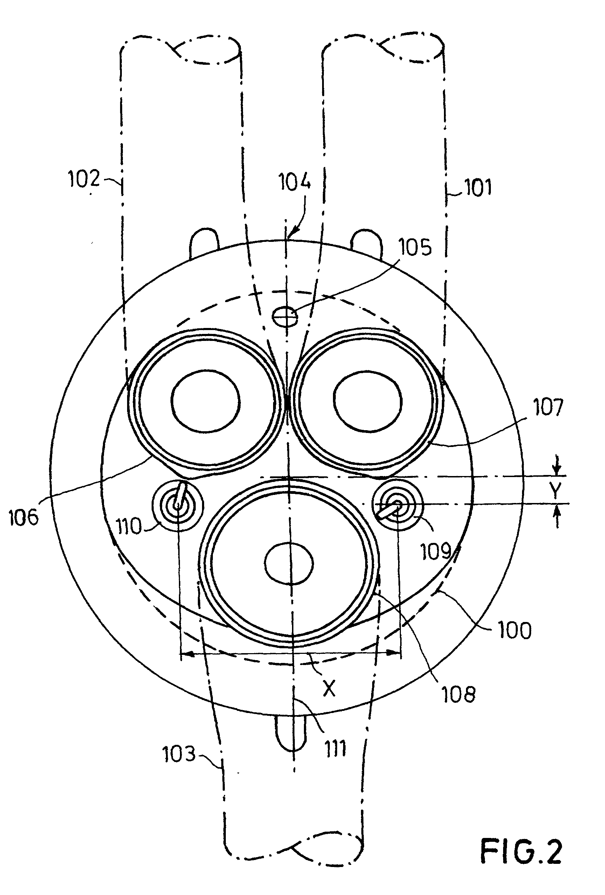

Figur 2 zeigt schematisch für einen Zylinder die Ansicht auf die
Zylinderkopfunterseite. An den kreisförmigen Brennraum 100 sind Einlasskanäle 101 und 102, sowie ein Auslasskanal 103 angeschlossen. Zwischen den Einlasskanälen ist der Injektor 104 angeordnet, der in einem Durchlass 105 in den Brennraum mündet. Die Einlasskanäle münden in Ventilsitzringe 106 und 107. Der Auslasskanal mündet in den Ventilsitzring 108. Zwischen den Ventilsitzringen von Einlass- und Auslasskanal sind die Zündkerzen 109 und 110 angeordnet. Mit Bezug auf die Referenzebene 111, die durch die Kolbenmittelachse und die Mitte der Injektoröffnung 105 geht, sind die Einlasskanäle im Wesentlichen symmetrisch ausgebildet. Der Auslasskanal 103 kann in einem Winkel zur Referenzebene verlaufen. Das Verhältnis zwischen Abstand X der Zündkerzen und dem Durchmesser B des Brennraumes (der Bohrung) 100 beträgt hier 0,59. Die Zündkerzen 110 und 109 sind um das Mass Y exzentrisch zur Kurbelwellenachsenebene angeordnet. Das Verhältnis Y/B beträgt hier 0,07.

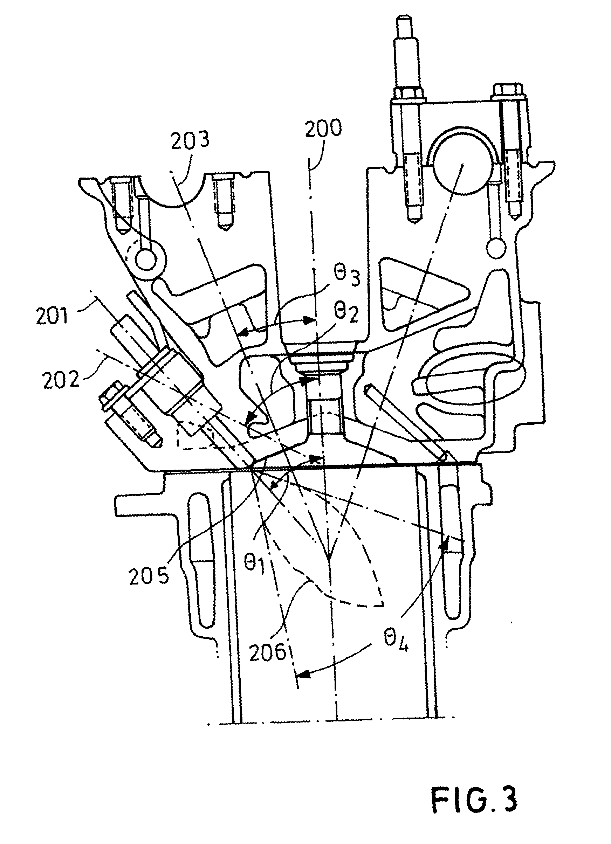

Fig. 3 zeigt in etwa einen Schnitt entlang der Referenzebene 111. Wie in Fig. 3 dargestellt ist die Injektorachse 201 gegenüber der Kolbenachse 200 um den Winkel Theta 1 geneigt. Dieser Winkel beträgt hier 40°. Die Mittellinie 202 eines linearen Abschnittes des Einlasskanals 102 ist um den Winkel Theta 2 gegenüber der Kolbenachse 200 geneigt. Dieser Winkel beträgt hier 60°. Der lineare Abschnitt des Einlasskanals liegt stromaufwärts vom Einlassventilsitz 205. Die Mittellinie 203 des Einlasskanals nahe dem Ventilsitz ist um einen Winkel Theta 3 gegen die Kolbenachse 200 geneigt. Dieser Winkel beträgt hier 20°. Der Kraftstoffstrahl weist in dem Bereich der unmittelbar an die Austrittsöffnung des Injektors grenzt einen spitzen Winkel Theta 4 auf. Dieser Winkel liegt bevorzugt zwischen 40° und 80° und beträgt hier 60°. Die Kopffläche des Kolbens ist etwa eben, allenfalls der Dachform des Brennraumes im Zylinderkopf angepasst.

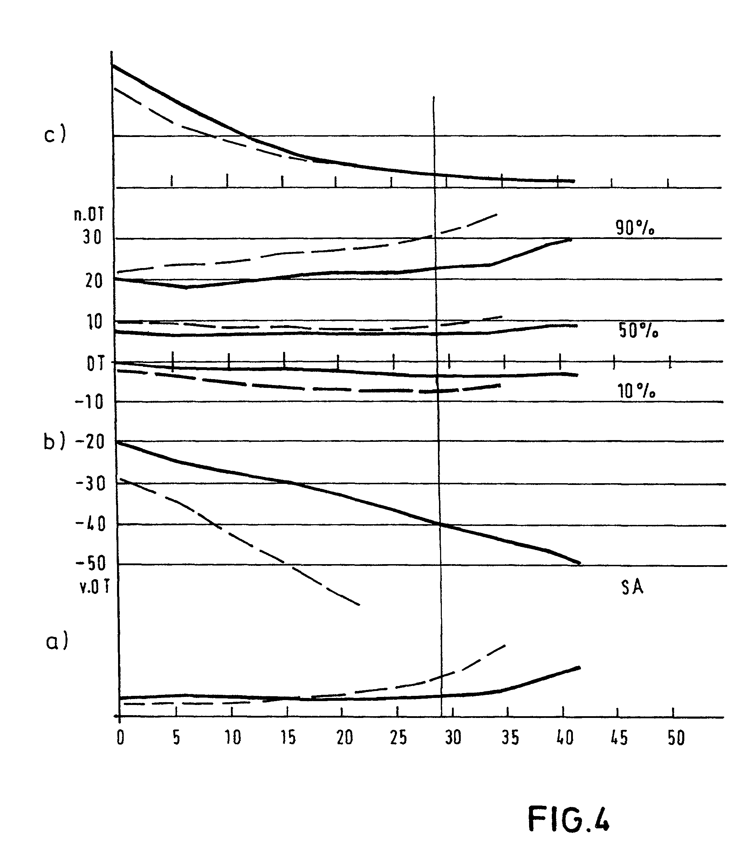

In Figur 4 sind Vergleichswerte für zwei Motoren dargestellt. Die gestrichelte Linie zeigt die Ergebnisse für einen 4 Ventilmotor mit Einspritzung im Einlaßkanal. Die durchgezogene Linie zeigt die Ergebnisse für den erfindungsgemässen Motor. Auf der Abszisse ist die AGR Rate aufgetragen. Im Teilbild a) ist die Standardabweichung des Druckes im Brennraum (IMEP) als Maß für die Laufruhe dargestellt. Der erfindungsgemässe Motor läuft auch bei AGR Raten von über 40 % noch mit akzeptabler Laufruhe. Im Teilbild b) ist auch der Ordinate der Zündzeitpunkt aufgetragen. Das mit der Bezeichnung SA bezeichnete Kurvenpaar gibt den Zündzeitpunkt an. Als negative Werte sind die Zündzeitpunkte vor OT aufgetragen. Die Prozentangaben beziehen sich auf den Grad der Umsetzung des gezündeten Gemisches. Der erfindungsgemässe Motor kann auch bis zu AGR Raten von ca. 42 % noch nahe dem Optimum von 8° nach OT für 50 % Umsatz gefahren werden. Im Teilbild c) ist die spezifische NOx Emission aufgetragen. Die gesamte Darstellung gilt für einen Lastschnitt bei 2.500 Umdrehungen/min und niedrige Last. Während der Vergleichsmotor der 4 Ventile unter Praxisbedingungen nur bis zu etwa maximal 15 % AGR Rate gefahren werden kann, ist bei etwa vergleichsweise guter Laufruhe beim erfindungsgemässen Motor unter Praxisbedingungen eine AGR Rate von 30 % möglich. Dabei hat der erfindungsgemässe Motor außerdem noch den Vorteil, daß nur eine relativ zum Vergleichsmotor geringere Vorzündung eingestellt werden muß. Die NOX Emission des erfindungsgemässen Motors ist gegenüber dem Vergleichsmotor bei vergleichbarer Laufruhe etwa halbiert.

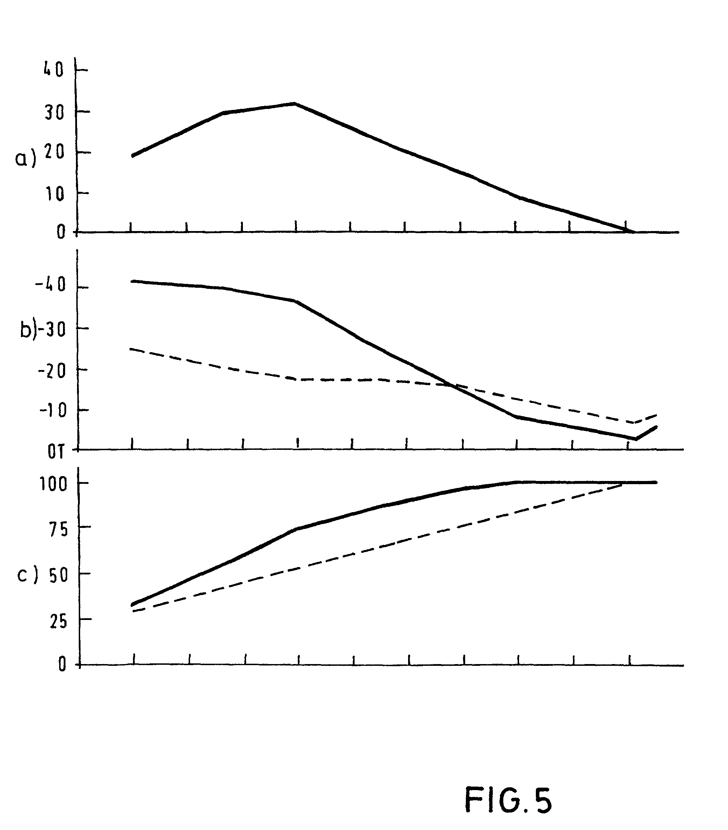

In Figur 5 ist auf der Abzisse die Last bei 2.500/nin aufgetragen. Die dargestellten Kurvenverläufe beziehen sich auf den erfindungsgemässen Motor. Die gestrichelte Linie zeigt die Werte ohne AGR. Die durchgezogene Linie zeigt die Werte unter Anwendung der AGR. Im Teilbild a) ist die AGR Rate eingetragen. Sie beginnt bei niedriger Motorlast, bei etwa 20 %, steigt dann mit zunehmender Last schnell auf ein Maximum von 30 % und sinkt dann langsam ab bis hin zu 0 kurz vor Erreichen der Vollast. Im Teilbild b) ist der Zündzeitpunktverlauf über der Last dargestellt. Bei niedriger Last wird der Zeitpunkt auf etwa 40 ° vor OT (hier als negativer Wert angegeben) eingestellt. Bei mittleren Lasten wird die Vorzündung mit steigender Last bei gleichzeitig abnehmender AGR Rate schnell zurückgenommen. Bei hohen Lasten verursacht die Rückführung von Abgas eine verstärkte Klopfneigung, so dass die Zündung sogar später als ohne Verwendung von AGR eingestellt werden muß. Im Teilbild c) ist der Saugrohrdruck dargestellt. Dieser wird gegenüber dem Betrieb ohne AGR bei großen AGR Raten deutlich angehoben. Bei hoher Last wird der Motor weitgehend entdrosselt betrieben.

## Patentansprüche

1. Motor mit Direkteinspritzung und Abgasrüchfükrung, mit einer Verbrennungskammer, die zwischen der Unterseite des Zylinderkopfes, der Oberseite des Kolbens, die etwa eben oder der Dachform des Brennraumes im Zylinderkopf angepaßt ist, und im übrigen von der Zylinderlauffläche gebildet wird
a) mit einem Injektor, dessen Achse (201) mit der Kolbenachse (200) in Projektion auf eine Referenzebene (111), die durch die Kolbenachse und die Injektordüse geht, einen Winkel Theta 1 bildet und wobei die Injektion in Richtung der Injektorachse erfolgt, mit zwei Lufteinlasskanälen mit Ventilen, wobei die Lufteinlasskanäle nahe den Ventilsitzen gegenüber der Kolbenachse (200) in Projektion auf die Referenzebene (111) eine Neigung Theta 3 aufweisen, die kleiner als Theta 1 ist, mit einem Luftauslasskanal mit einem Ventil sowie mit zwei Zündkerzen, deren Mittelpunkte äquidistant zu den Mittelpunkten der benachbarten Einlass/Auslassventilsitze und symmetrisch zur Referenzebene (111) angeordnet sind, wobei der Injektor zwischen den Lufteinlasskanälen angeordnet ist, wobei
b1) ein im Bereich der Zylinderkopfaußenfläche angeordneter,
b2) etwa linearer, stromaufwärts der Ventilsitze gelegener Abschnitt (202) der Lufteinlasskanäle in der Projektion auf die Referenzebene (111) eine Neigung Theta 2 gegenüber der Kolbenachse (200) aufweist, die größer ist als die Neigung Theta 1 des Injektors zur Kolbenachse (200), wobei
c) die beiden Lufteinlasskanäle als Füllungskanäle ausgebildet sind, wobei
d) in der Projektion auf die Ebene durch die Zylinderkopfunterseite die Verbindungslinien der gekrümmten Einlaßkanäle zwischen den Mittelpunkten der Einlaßventilsitze und den Mittelpunkten der Einlasskanalöffnungen an der Zylinderkopfaußenfläche gegenüber der Referenzebene (111) geneigt sind,
e) und die Einlaßkanäle in der Nähe der Ventilsitze in der Projektion auf die Ebene durch die Zylinderkopfunterseite konvergieren und unit Bezug auf die Referenzebene (111) symmetrisch ausgerichtet sind.

2. Motor nach Anspruch 1, **dadurch gekennzeichnet, dass** der Kraftstoffstrahl unmittelbar hinter der Auslassöffnung des Injektors einen spitzen Winkel aufweist.

3. Motor nach einem der Ansprüche 1 bis 2, **dadurch gekennzeichnet, dass** das Verhältnis des Abstandes (X) der Zündkerzen zum Bohrungsdurchmesser (B) zwischen 0,2 und 0,8 liegt.

## Claims

1. Engine with direct injection and exhaust gas recirculation, having a combustion chamber which is formed between the underside of the cylinder head, the topside of the piston and otherwise by the cylinder liner,
a) having an injector, the axis (201) of which forms an angle theta 1 with the piston axis (200) in projection onto a reference plane (111), which passed through the piston axis and the injector nozzle, and the injection taking place in the direction of the injector axis, having two air intake ports with valves, the air intake ports in the vicinity of the valve seats having an inclination theta 3, which is less than theta 1, with respect to the piston axis (200) in projection onto the reference plane (111), having an air discharge port with a valve and with two spark plugs, the centre points of which are arranged equidistant with respect to the centre points of the adjacent intake/discharge valve seats and symmetrically with respect to the reference plane (111), the injector being arranged between the air intake ports, wherein
b1) a section (202) of the air intake ports which is arranged in the region of the cylinder head outer surface and
b2) is approximately linear and located upstream of the valve seats, in projection onto the reference plane (111), has an inclination theta 2 with respect to the piston axis (200) which is greater than the inclination theta 1 of the injector with respect to the piston axis (200), wherein
c) the two air intake ports are designed as charge ports, wherein
d) in projection onto the plane through the cylinder head underside, the connecting lines of the curved intake ports between the centre points of the intake valve seats and the centre points of the intake port openings, on the cylinder head outer surface, are inclined with respect to the reference plane (111),
e) and the intake ports, in the vicinity of the valve seat, in projection onto the plane, converge through the cylinder head underside and are oriented symmetrically with respect to the reference plane (111).

2. Engine according to Claim 1, **characterized in that** the fuel jet has an acute angle directly behind the outlet opening of the injector.

3. Engine according to either of Claims 1 and 2, **characterized in that** the ratio of the distance (X) between the spark plugs and the bore diameter (B) is between 0.2 and 0.8.

## Revendications

1. Moteur avec injection directe et recirculation des gaz d'échappement, comprenant une chambre de combustion formée entre le côté inférieur de la culasse, le côté supérieur du piston, qui est approximativement plan ou qui est adapté à la forme du toit de l'espace de combustion dans la culasse, et en outre par la surface de contact de cylindre,
a) comprenant un injecteur, dont l'axe (201) forme avec l'axe du piston (200) en projection sur un plan de référence (111), qui passe par l'axe du piston et la buse d'injection, un angle thêta 1, l'injection s'effectuant dans la direction de l'axe de l'injecteur, avec deux conduits d'admission d'air comprenant des soupapes, les conduits d'admission d'air présentant à proximité des sièges de soupape par rapport à l'axe du piston (200) en projection sur le plan de référence (111) une inclinaison thêta 3 qui est inférieure à thêta 1, avec un conduit d'échappement d'air comprenant une soupape avec deux bougies d'allumage dont les centres sont disposés de manière équidistante par rapport aux centre des sièges de soupapes d'admission/d'échappement voisins et symétriquement par rapport au plan de référence (111), l'injecteur étant disposé entre les conduits d'admission d'air,
b1) une portion (202) des conduits d'admission d'air disposée dans la région de la surface extérieure de la culasse,
b2) placée de manière approximativement linéaire, en amont des sièges de soupape, présentant en projection sur le plan de référence (111) une inclinaison thêta 2 par rapport à l'axe du piston (200) qui est supérieure à l'inclinaison thêta 1 de l'injecteur par rapport à l'axe du piston (200),
c) les deux conduits d'admission d'air étant réalisés en tant que conduits de remplissage,
d) les lignes de connexion des conduits d'admission courbes entre les centres des sièges de la soupape d'admission et les centres des ouvertures des conduits d'admission sur la surface extérieure de la culasse étant inclinées par rapport au plan de référence (111) en projection sur le plan passant à travers le côté inférieur de la culasse,
e) et les conduits d'admission à proximité des sièges de soupape en projection sur le plan passant à travers le côté inférieur de la culasse convergeant et étant orientés symétriquement par rapport au plan de référence (111).

2. Moteur selon la revendication 1, **caractérisé en ce que** le jet de carburant présente un angle aigu immédiatement derrière l'ouverture de sortie de l'injecteur.

3. Moteur selon l'une quelconque des revendications 1 à 2, **caractérisé en ce que** le rapport de la distance (X) des bougies d'allumage au diamètre de l'alésage (B) est compris entre 0,2 et 0,8.
